(19) Europäisches Patentamt

European Patent Office

Office européen des brevets

(11) **EP 4 476 578 B1**

(12) **EUROPEAN PATENT SPECIFICATION**

(45) Date of publication and mention
of the grant of the patent:
**04.03.2026  Bulletin 2026/10**

(21) Application number: **23707275.6**

(22) Date of filing: **10.02.2023**

(51) International Patent Classification (IPC):
***G02B 6/12*** *(2006.01)*       ***G02B 6/293*** *(2006.01)*

(52) Cooperative Patent Classification (CPC):
**G02B 6/12007; G02B 6/29346; G02B 2006/12159**

(86) International application number:
**PCT/EP2023/053267**

(87) International publication number:
**WO 2023/152268 (17.08.2023 Gazette 2023/33)**

(54) **INTERFEROMETER FOR A PHOTONIC INTEGRATED CIRCUIT**

INTERFEROMETER FÜR EINE PHOTONISCHE INTEGRIERTE SCHALTUNG

INTERFÉROMÈTRE POUR CIRCUIT INTÉGRÉ PHOTONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **10.02.2022  GB 202201755**

(43) Date of publication of application:
**18.12.2024  Bulletin 2024/51**

(73) Proprietor: **SMART Photonics Holding B.V.**
**5656 AE Eindhoven (NL)**

(72) Inventor: **HOEKSTRA, Tsjerk Hans**
**Eindhoven**
**5656 AE (NL)**

(74) Representative: **EIP**
**Fairfax House**
**15 Fulwood Place**
**London WC1V 6HU (GB)**

(56) References cited:
**EP-A1- 2 518 547        EP-A1- 3 757 633**
**US-A1- 2003 223 672**

**Description**

Background

Interferometers are used to modulate the intensity and/or the wavelength of an optical signal. This allows the control of intensity of the light at the optical output, possibly as a function of the wavelength. More precise control of the wavelength response and/or the intensity of optical signals is desirable. US2003/0223672A1 relates to insertion loss reduction, passivation, and/or planarization and in-wafer testing of integrated optical components in photonic integrated circuits; EP3757633AI relates to a waveguide type optical interferometer circuit; and EP2518547AI relates to a planar lightwave circuit. It is desirable to provide an improved interferometer for a photonic integrated circuit (PIC).

Brief Description of the Drawings

Figure 1 shows schematically a cross-section view of an interferometer in accordance with examples.
Figure 2 shows schematically a plan view of an interferometer in accordance with further examples.
Figure 3 and Figure 4 shows schematically a cross-section view of an interferometer of Figure 2, taken at plane P200 and P210 respectively.
Figure 5 shows schematically a plan view of an interferometer in accordance with further examples.
Figure 6 shows schematically a cross-section view of an interferometer of Figure 5, taken at plane P320.
Figure 7 shows schematically a cross-section view of an interferometer of further examples.
Figure 8 and Figure 9 shows schematically a plan view of an interferometer in accordance with further examples.
Figure 10 shows schematically a plan view of photonic integrated circuit in accordance with further examples.
Figure 11 illustrates a method of manufacturing an interferometer in accordance with examples.

Detailed Description

An interferometer has two waveguides with a designed difference in path length or effective refractive index between the two waveguides, so that a desired phase difference between light propagating through the waveguides and resultant interference occurs. In certain circumstances, the inventors have observed a change in this difference, to the extent that performance of the interferometer is unacceptable. It has now been realised that a planarisation layer (e.g. polyimide) can expand or contract e.g. in dependence on temperature change, to the extent that the interferometer's performance is impinged. Even if expansion or contraction of the layer is constrained (e.g. by adhesion to a neighbouring structure), the planarisation layer can still exert a force on neighbouring structures to influence an effective refractive index of a waveguide.

In the situation with a first waveguide of the interferometer having a longer path length than a second waveguide of the interferometer, e.g. in an asymmetric Mach-Zehnder Interferometer (asymmetric MZI), there can be a different change in the effective refractive index of the first waveguide compared with the change in effective refractive index of the second waveguide. This changes the difference between (for each waveguide), the path length multiplied by the effective refractive index, the phase difference and the time-of-flight, which compromises the interferometer's performance. The change in difference can e.g. shift the wavelength of the output of the interferometer by 0.2 nanometres. In applications, such as telecommunications, such a shift of output wavelength is detrimental to the performance of a device as operating wavebands can be, e.g. 0.8nm.

One approach to improve the interferometer could be to remove the layer which can expand and contract; however, this is less desirable as the planarisation layer can be used to protect a waveguide from external contamination but also provides planarisation and other functions in the interferometer.

An insight of the inventors is how to configure an interferometer so that such forces (herein referred to as expansion and contraction forces) do not overly affect the interferometer's performance, especially given the sensitivity of an interferometer's (e.g. an asymmetric MZI) performance to such forces. For example, the change in the output wavelength of the interferometer, e.g. when used as a passive wavelength filter, is no greater than +/- 0.1 nanometres. In doing so, the inventors have realised various techniques to at least partly modulate generation of the forces, to at least partly modulate transmission (directly or indirectly) of such forces to one or more structures which influence the effective refractive index of the waveguide, and/or to at least partly compensate for an effect the forces have on the effective refractive index difference between the waveguide(s), and hence an output of the interferometer. This is not trivial, given the very small scale of PICs compared with larger scale chips, and indeed the challenges described herein do not manifest themselves in larger scale systems, or at least would cause only negligible effects.

The inventors have therefore devised examples of an improved interferometer, which keeps the benefits of a structure susceptible to such expansion and contraction forces (e.g. a planarisation layer), yet has the desired performance for PICs as the interferometer ages (the layer material may tend to expand with age) and/or even in adverse conditions (e.g. a change in temperature within a range of 0 degrees Celsius to 70 degrees Celsius, a change in humidity within a range of 5% relative humidity to 95% relative humidity, a change in air pressure within a range of 200 Kilopascals to the vacuum of space, dust, radiation (background and nuclear), ultraviolet light exposure (during assembly), and reflow soldering exposure (during assembly)).

Such examples will now be described in detail.

Examples of an interferometer for a PIC are described herein. Such interferometers are configured so that an expansion force or a contraction force exerted by a structure (e.g. a layer such as a planarisation layer) has a reduced effect on the performance of the interferometer. Examples of such an interferometer have: a first waveguide with a first effective refractive index and a first path length along an optical propagation axis of the first waveguide; a second waveguide with a second effective refractive index and second path length along an optical propagation axis of the second waveguide; and a layer on at least one of the first waveguide or the second waveguide. The interferometer is configured to reduce change in a difference between: a) the first path length multiplied by the first effective refractive index, and b) the second path length multiplied by the second effective refractive index. The change in the difference is caused by at least one of the expansion force or the contraction force referred to above.

The waveguide(s) do not necessarily need to experience at least part of the force(s) for an effective refractive index to be affected, but if the waveguide(s) do receive at least part of the force(s) the effective refractive index and hence the interferometer's performance is affected. Thus, in some examples, the interferometer is configured to reduce application of the expansion force or the contraction force from the layer to at least one of the first waveguide or the second waveguide, in turn to reduce the impact of the force(s) on the interferometer's performance.

As will become clearer from examples described below, the interferometer is configured to reduce the change in the difference between a) and b) in various ways, including at least one of: i) compensating an effect of the force(s) on the change in the difference, e.g. by mechanically and/or optically compensating the effect of the force(s) on the change in the difference; ii) at least partly modulating generation of the force(s), e.g. by mechanically at least partly modulating generation of the force(s); or iii) at least partly modulating transmission of the force(s) to cause the change in the difference, e.g. by mechanically at least partly modulating transmission of the force(s) to cause the change in the difference.

As will be appreciated, compensating may be considered to be the providing of an effect which counters, e.g. at least partly cancels or at least partly corrects, for an undesirable effect such as the change in interferometer performance caused by the force(s). Optical compensation is for example using an optical effect for compensating, and mechanical compensation is for example using a mechanical feature or structure of the interferometer for compensating. Sometimes a mechanical feature or structure can in turn provide a compensatory optical effect.

Modulating is for example an adjustment or change to the generation and/or transmission of force(s) so its impact on the interferometer's performance can be lessened.

Examples are now described which reduce the change in the difference between a) and b). It is to be appreciated that the different features described using different figures may be used in combination in further examples. For example, a width of a waveguide is selected as well as having a recess in the layer, to reduce the change in the difference between a) and b).

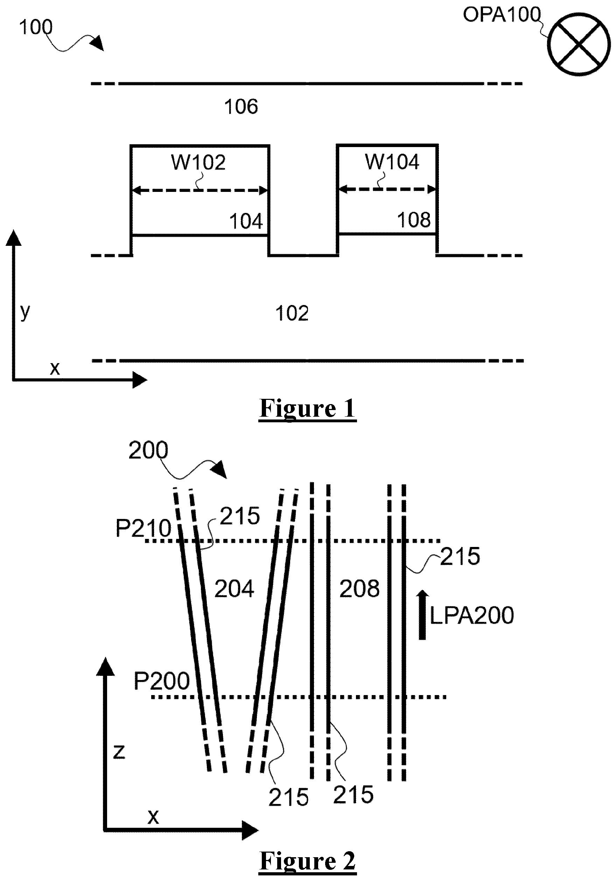

Referring now to Fig. 1, in examples, an interferometer 100 is for a photonic integrated circuit and the interferometer comprises: a first waveguide 104 with a first effective refractive index and a first path length along an optical propagation axis OPA100 of the first waveguide; a second waveguide 108 with a second effective refractive index and second path length along an optical propagation axis OPA100 of the second waveguide; and a layer 106 on at least one of the first waveguide or the second waveguide. The layer extends over the first and second waveguides, in these examples so that portions of the layer contact the first and second waveguides respectively. In these and other examples described herein, a portion of the layer contacts a surface of the waveguide directly, whereas in other examples a portion of the layer is supported by the waveguide. In these ways at least a portion of the layer is considered to be on a waveguide, e.g. a surface of the waveguide furthest from a substrate 102 on which the waveguides are formed, or a side surface of the waveguide. With the layer on the waveguide in this way, an expansion or contraction force from the layer (which is e.g. a stress, strain, shear, compression or tension) is transmissible to one or both of the waveguides. In the examples of Fig. 1, part of the layer is also between the waveguides, though in other examples an alternative layer or material may lie between the waveguides. The layer is e.g. a polymer dielectric, or comprises polyimide, polyacrylate, polycarbonate, polysiloxane or benzocyclobutene.

In examples, such as those of Fig. 1, the interferometer 100 is configured to reduce the change in difference between a) and b) by appropriate design of the waveguides, including their widths. As illustrated, a width W102 of the first waveguide 104 perpendicular to the optical propagation axis OPA100 of the first waveguide, is different from and parallel a width W104 of the second waveguide 108 perpendicular to the optical propagation axis OPA100 of the second waveguide. The width of at least one of the first waveguide or the second waveguide is, for example, 1.5 micrometres, 13 micrometres, or between 0.2 micrometres and 20 micrometres. An appropriately selected waveguide width, e.g. with one waveguide wider than the other waveguide, can reduce the effect of the force(s) because such a wider waveguide structure is e.g. mechanically stiffer, and so less distortable by the force(s). Note that in examples illustrated the width is shown in one orientation, but in further examples the width may be taken in a different orientation perpendicular the propagation axis (e.g. an orientation which may be considered a height of the waveguide). In some examples more than one such width (e.g. orthogonal each other) are set to define dimensions of the waveguide to reduce the effect of the force(s).

It is noted that, with one waveguide having a longer optical path length than the other waveguide, the effect of the force(s) on one of the waveguide compared with the other waveguide is different, hence leading to a change of difference between a) and b). To reduce this change of difference, the width of the first waveguide is selected differently from the width of the second waveguide, e.g. to differently compensate each waveguide for the effect of the force(s) on each waveguide. In other words, if one of the waveguides is more affected by the force(s) than the other waveguide, the former would need more compensation than the latter, to maintain the desired difference between a) and b). This can be considered mathematically as follows for an asymmetric interferometer, though such an explanation should not be taken as limiting at least for some examples. The first waveguide has a path length L1, longer than the path length L2 of the second waveguide by a path length L3. If such a compensation (or in other examples modulating a generation or transmission) of the force(s) is optimised, the effect of the change in the force(s) on the performance of the interferometer can be theoretically negligible. For example, if the force(s) only affects the effective refractive index of the first waveguide and the second waveguide: the effect on the first waveguide is the change DN1 in effective refractive index of the first waveguide multiplied by the path length L1 of the first waveguide; and the effect on the second waveguide is the change DN2 in effective refractive index of the second waveguide multiplied by the path length L2 of the second waveguide. Then, if the following condition is met, the change would be compensated for.

$$1 + \frac{L3}{L2} = \frac{DN2}{DN1}$$

This condition assumes that the respective change in effective refractive index is homogeneous across each waveguide and that there is no change in the length of either waveguide.

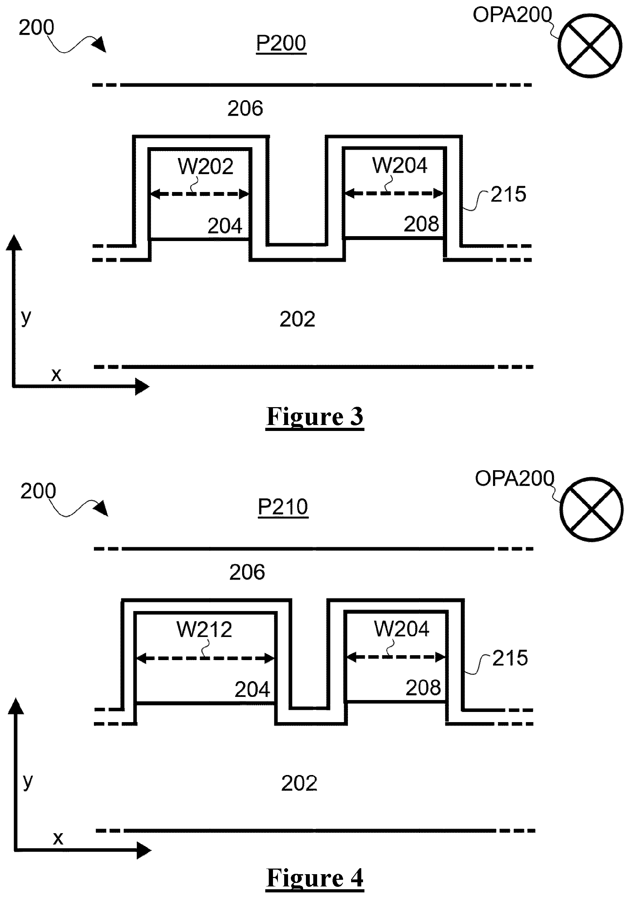

In other examples, such as those of Figures 2 to 4, where waveguide width can be used to compensate for the force(s), a first width W202 of the first waveguide 204 perpendicular to the optical propagation axis of the first waveguide OPA200 at a first point on the optical propagation axis of the first waveguide, is different from and parallel a second width W212 of the first waveguide perpendicular to the optical propagation axis of the first waveguide at a second point on the optical propagation axis of the first waveguide. With this change in width along the axis of the waveguide, the waveguide can be considered tapered, with a change in width being e.g. stepped or gradual, the latter offering comparatively lower optical losses. Whilst in these examples one waveguide has different widths along its optical propagation axis, in other examples both waveguides each have a change of width along their respective optical propagation axes.

Features of these examples are similar to features described previously, and will be referred to using the same reference numeral incremented by 200 instead of 100; corresponding descriptions for such features apply here also. The interferometer shown in Fig's 2 to 4 comprises a passivation layer 215 covering and in contact with the waveguides. The passivation layer e.g. improves the performance of at least one of the first waveguide and the second waveguide by reducing optical or electrical interference or cross-talk. The passivation layer, for example comprises Silicon Oxide or Silicon Nitride, other materials are envisaged. On the passivation layer is the layer 206, so the layer 206 is on the waveguides by portions of the layer 206 supported respectively by the waveguides. It is to be appreciated that whilst the passivation layer is shown for Fig's 2 to 4, other examples described herein can comprise such as passivation layer.

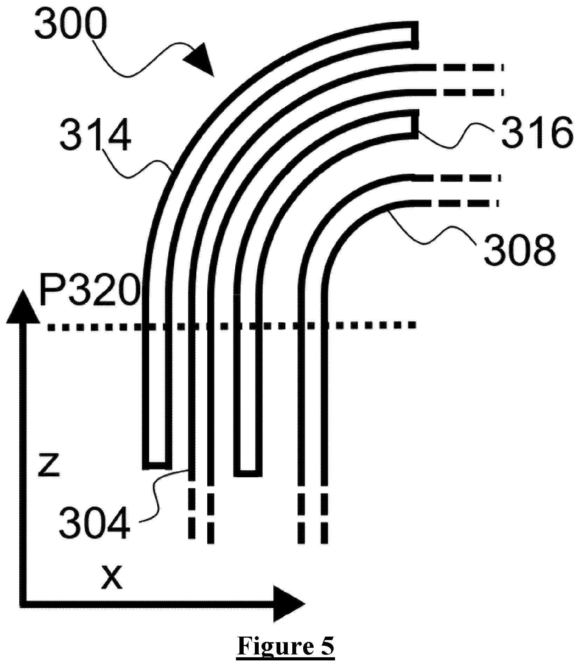

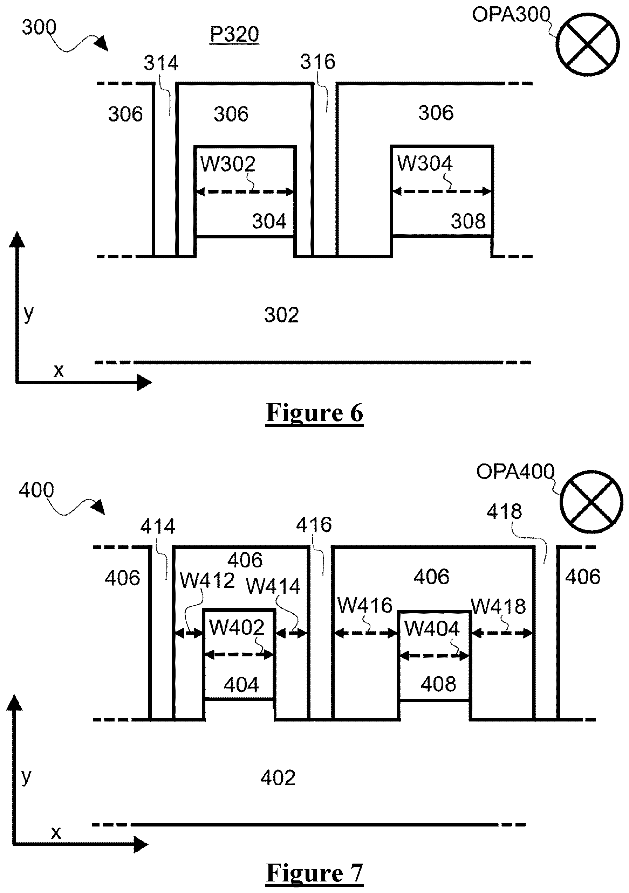

In further examples, such as those of Figure 5 and Figure 6, the interferometer 300 is configured to reduce the change in the difference between a) and b) by a recess 314 in the layer 306. Features of these examples are similar to features described above, and will be referred to using the same reference numeral incremented by 300 instead of 100 or 200; corresponding descriptions for such features apply here also.

A recess is for example a thinning, depression, or aperture in the layer 306 which modulates, e.g. reduces, transmission of the expansion and/or contraction force(s) from a part of the layer to another part of the layer, in turn modulating transmission of the force(s) to one or more structure of the interferometer which influences an effective refractive index of one or more of the waveguides. In examples where the recess is an aperture through the layer, the recess may also extend towards a substrate on which the waveguides are formed. Such a deeper recess may be formed by etching. The recess is for example elongate, so may be considered a groove or channel, with sides corresponding at least to surfaces of the layer. A width and length (e.g. lateral extent), and/or depth of the recess is selected to provide a desired modulation of the transmission of the force(s). Moreover, a position of the recess relative to one or both of the waveguides, may be selected to improve modulation of the transmission of the force(s), to in turn reduce the change in difference between a) and b). Saying this, a recess may be spaced no less than 1 to 5 x the height of a waveguide, so that material between the recess and the waveguide is not too thin.

In examples such as those of Figures 5 and 6, the recess 314 is elongate and parallel at least part of the first optical propagation axis OPA300. The interferometer comprises one recess, and in examples such as those of Figure 5 and Figure 6, the recess is a first recess 314, and the interferometer 300 is configured to reduce the change in the difference by a second recess 316 in the layer 306. The second recess is elongate and parallel to the second optical propagation axis OPA300. The first waveguide 304 is between the first recess 314 and the second recess 316, though in other examples, the second waveguide or both the first waveguide and the second waveguide are between the first recess and the second recess. At least one of the first waveguide 304 and the second waveguide 308 is curved, and in some examples each of the first waveguide and the second waveguide is curved. Curvature of at least one of the first waveguide or the second waveguide is e.g. to reduce at least one of the size or the footprint of the interferometer. Curvature of at least one of the waveguides also, e.g. simplifies the design wherein the first path length is not equal to the second path length. Where each waveguide is curved, a radius of curvature of the first waveguide 304 may be different to a radius of curvature of the second waveguide 308, though in other examples the radius of curvature of the first waveguide is the same as the radius of curvature of the second waveguide. Correspondingly, one or more recess may be curved in correspondence with one or more waveguide.

In further examples, such as those of Figure 7, the interferometer 400 is configured to reduce the change in the difference by a first distance W412 between a surface of the first waveguide 404 closest to the first recess 414 and a surface of the first recess 414 closest to the surface of the first waveguide 404 different from a second distance W416 between a surface of the second waveguide 408 closest to the second recess 416 and a surface of the second recess 416 closest to the surface of the second waveguide 408. In other words, in examples such as those of Figure 7, one or more recess is positioned closer to one of the waveguides than the other of the waveguides. In this way, the recess may modulate transmission of the force(s) more for one of the waveguides than the other waveguide. Thus, where the force(s) have a greater influence on the effective refractive index of one waveguide, compared with the other waveguide, the recess can be positioned appropriately, e.g. closer to one of waveguides than the other, to compensate the waveguide more affected by the force(s) more than the other waveguide. In doing so, the change in the difference between a) and b) can be reduced.

As shown in Figure 7, the first waveguide 404 is between the first recess 414 and the second recess 416, though it is envisaged that in other examples the second waveguide or both the first waveguide and the second waveguide are between the first recess and the second recess.

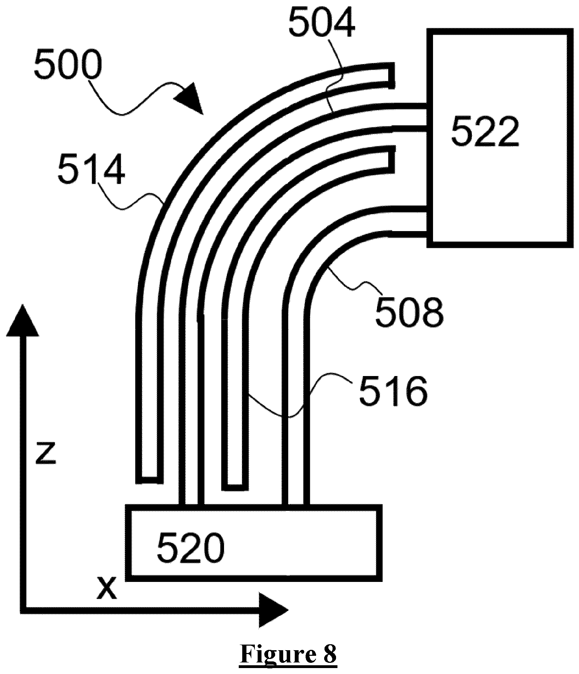

In examples, such as those of Figure 8, the interferometer 500 is configured to reduce the change in the difference by comprising a first recess 514 and a second recess 516, the longer waveguide (the first waveguide 504) is between the first recess 514 and the second recess 516. The interferometer comprises two power couplers (sometimes called power splitters) 520 and 522, the power couplers for at least one of: splitting a light input into the interferometer and injecting the split light into both the first waveguide and the second waveguide; or combining and/or interfering the output from the first waveguide and the second waveguide. In some such examples, the power couplers are multimode interferometers (MMIs); however other power couplers are envisaged, such as a fused waveguide or a beam splitter. Each waveguide is curved and the radius of curvature of the first waveguide 504 is different to a radius of curvature of the second waveguide 508; this, e.g. simplifies the design of an interferometer 500 where the path length of the first waveguide is different to the path length of the second waveguide. Features of these examples are similar to features described above, and will be referred to using the same reference numeral incremented by 500 instead of 100, 200, 300 or 400; corresponding descriptions for such features apply here also.

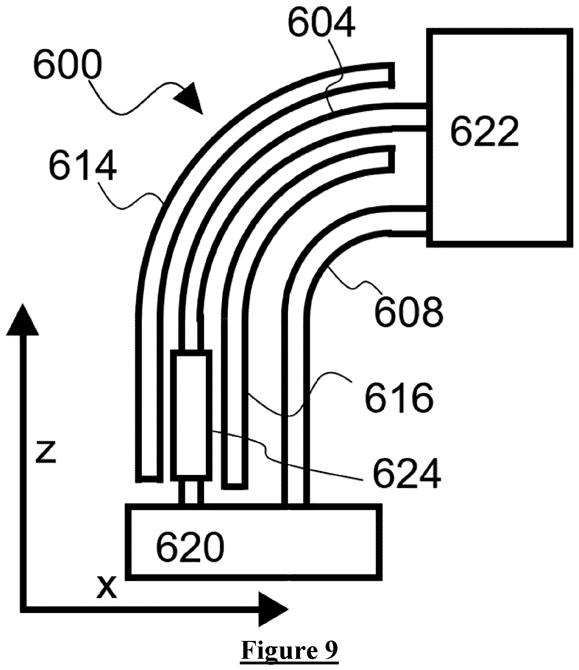

In examples, such as those of Figure 9, the interferometer 600 is configured to reduce the change in the difference by a 1x1 MMI 624 (1x1 refers to the number of input and output ports of the MMI, e.g. an MMI with 3 inputs and 3 outputs is a 3x3 MMI) in the first waveguide 604. Other configurations, for example the MMI in the second waveguide or the MMI in both the first waveguide and the second waveguide are envisaged. Other MMIs are envisaged, e.g. 2x2, 2x1. In some such examples, the MMI reduces the effect of the force(s) on the effective refractive index of the first waveguide because the MMI is a larger structure and so may be more resistant to mechanical forces than a waveguide; an example waveguide width is 1.5 micrometres and an example 1x1 MMI width is 13 micrometres, though other widths are envisaged. The interferometer comprises two power couplers 620 and 622, the power couplers for at least one of: splitting a light input into the interferometer and injecting the split light into both the first waveguide and the second waveguide; or combining and/or interfering the output from the first waveguide and the second waveguide. Features of these examples are similar to features described above, and will be referred to using the same reference numeral incremented by 600 instead of 100, 200, 300, 400, or 500; corresponding descriptions for such features apply here also.

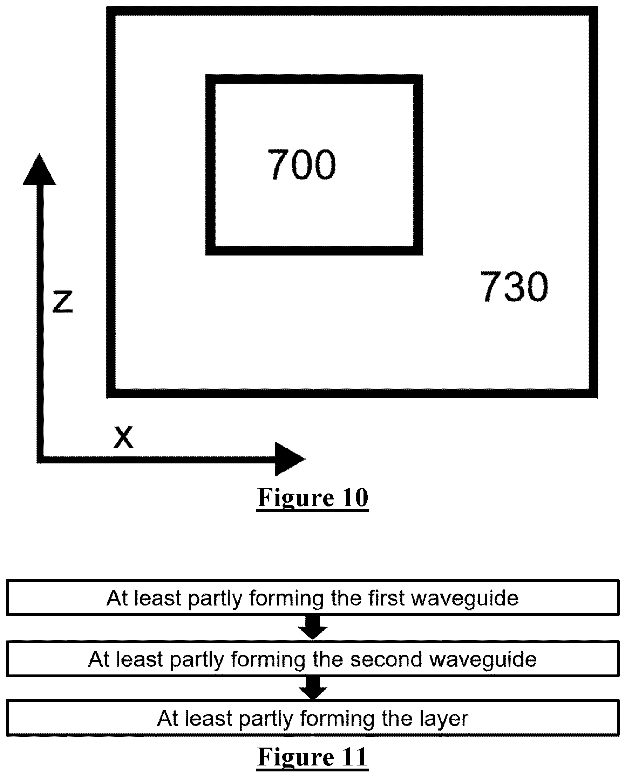

In examples, such as those of Figure 10, a PIC comprises the interferometer 700. The interferometer 700 is on a monolith 730, e.g. a substrate, for a PIC. The monolith is, for example, a compound of elements from groups III and V of the Periodic Table, for example a so-called III-V semiconductor compound such as Indium Phosphide (InP), though Gallium Arsenide (GaAs), Gallium Antimonide (GaSb), Gallium Nitride (GaN), Indium Gallium Arsenide (InGaAs), Indium Aluminium Arsenide (InAlAs), Aluminium Galllium Indium Aluminium Gallium Arsenide (InAlGaAs), Indium Gallium Arsenide Phosphide (InGaAsP), Silicon (Si), Silicon Nitride ($Si_3N_4$), or Silicon Oxide ($SiO_2$) and other semiconductor, semi-insulator and insulator materials are envisaged. Features of these examples are similar to features described above, and will be referred to using the same reference numeral incremented by 700 instead of 100, 200, 300, 400, 500 or 600; corresponding descriptions for such features apply here also.

In some examples, a device comprises the PIC described above. The device is, for example: a laser, a photodiode, a photovoltaic, telecommunications devices, light detection and ranging (LiDAR) devices, distributed Bragg reflector devices, or optical imaging devices.

In some examples, a PIC comprises two or more interferometers. Such interferometers can be optically connected, e.g., to provide functionality such as both wavelength and intensity modulation, or to provide output light with a narrower wavelength dispersion than can be achieved than can be achieved with a single interferometer.

In some examples, the first waveguide and the second waveguide each have the same construction, and so are formed of the same materials. E.g., each of the waveguides comprise, e.g. is formed of, InP. Using such a semiconductor material with a strong electro-optical effect, low electrical loss and a low optical loss can be achieved for a generic platform.

In some examples, modulating the phase difference between the output of the first waveguide and the output of the second waveguide is achieved by modulating a potential difference applied across at least one of the first waveguide or the second waveguide, or a difference between a potential difference applied across the first waveguide and a potential difference applied across the second waveguide, due to the electro-optical effect. In some such modulators at least one of the first waveguide or the second waveguide comprises an electro-refractive modulator. In some examples the electro-refractive modulator is an MZI or an asymmetric MZI. MZIs and asymmetric MZIs give fast modulation speed and large optical extinction. In some examples, at least one of: a potential difference is applied across the first waveguide by a first electrode on the first waveguide, or a potential difference is applied across the second waveguide by a second electrode on the second waveguide. As a person skilled in the art appreciates, each electrode comprises, e.g. is formed of, a sufficiently high electrically conductive material such as Gold (Au). Other electrical conductors are envisaged in other examples, such as: Silver (Ag), Platinum (Pt), Nickel (Ni), Carbon (C), Cadmium (Cd), Tungsten (W), Aluminium (Al), or Copper (Cu).

It is to be appreciated that between the first waveguide and the second waveguide, there is for example at least one of a semiconductor, dielectric, or air. This separation of the first waveguide and the second waveguide helps to reduce optical interference between the first waveguide and the second waveguide and to reduce electrical crosstalk between the first waveguide and the second waveguide.

As the skilled person will appreciate, an interferometer uses interference between a plurality of light beams when the light beams are combined. A phase difference between the light beams produces constructive interference or destructive interference. In some examples the interferometer is an MZI, such as an asymmetric MZI. Other example interferometers are a Fizeau interferometer, a Fabry Perot interferometer, a Michelson interferometer, or a Lyot interferometer, for example. In some examples, an interferometer comprises an electro-refractive modulator. In some such examples, the interferometer is configured for light which comprises infrared radiation; in some such examples, the wavelength of the light is between 1200 nanometres and 1700 nanometres and/or used for telecommunication applications. In examples, the interferometer as a component of the PIC comprises a stack of structures, layers and/or features, which together operate as or at least partly contribute to the functioning of the interferometer.

A PIC (photonic integrated circuit) may be considered an optical circuit in which two or more photonic devices (e.g. devices that perform functions using light) are optically connected. A PIC may include components that perform functions including, for example: emitting light; detecting light; amplifying light; guiding light; reflecting light; diffracting light; mixing light of different wavelengths; separating light of different wavelengths; polarisation conversion; optical filtering; power splitting; amplitude modulation; and phase modulation. A PIC can be considered an optical analogue of an electronic circuit. PICs typically operate in the visible or near infrared region of the electromagnetic spectrum (e.g. light with wavelengths in the range of approximately 400 nanometres (nm) to approximately 1650 nm); however, PICs can operate in other regions of the electromagnetic spectrum too. In some examples, the light comprises infrared radiation; in some such examples, the wavelength of the light output from the interferometer is tunable. In some examples, such wavelengths are used for telecommunication applications.

A commercially utilised material platform for PICs is indium phosphide (InP), which allows for integration of optically active and passive functions on the same chip; however, other material platforms such as silicon (Si), Gallium Arsenide (GaAs) or lithium niobite (LiNBO3), may be utilised as a platform for PICs. A PIC may comprise hundreds of components integrated in a single chip.

A person skilled in the art will appreciate that a waveguide is for guiding light. Light propagates within a waveguide and is confined within a waveguide due to reflection at the boundaries of the waveguide. A waveguide usually has a refractive index higher than the refractive index of material in contact with the waveguide at the boundaries at which confinement of light is desired. For example, due to this refractive index difference at the boundaries at which confinement of light is desired, total internal reflection takes place when the angle of incidence at these boundaries of the waveguide is greater than the critical angle. In this manner, a waveguide guides the propagation of the light. For a particular optical mode to propagate in the waveguide, it is desired that the light reflected at the boundaries of the waveguide fulfils the conditions for constructive interference. Quantum wells are commonly used in semiconductor structures to provide electronic confinement. For example, in optoelectronics devices, quantum wells are used to tune the electronic band gap, thereby tuning the energy (or frequency) of photons that are emitted (in the case of emitters) or absorbed (in the case of absorbers). A multiple quantum well waveguide is a waveguide that comprises multiple quantum wells, which is envisaged as a waveguide of examples described herein. In many applications the effect of a quantum well can be increased by providing multiple quantum wells in a stack.

Effective refractive index is a dimensionless number that describes how fast light travels through a waveguide and how light attenuates through a waveguide. Effective refractive index is commonly expressed as a complex number; however, herein only the real component of refractive index is considered. In some examples, effective refractive index is dependant on the wavelength of the light being considered. Herein when a comparison is made between two refractive indices, the comparison is between the real components for the same wavelength of light.

An optical propagation axis of a waveguide is an axis of the waveguide which the waveguide is configured for light to propagate along. In some examples an optical propagation axis is curved, e.g. due to a curve in a waveguide.

A path length of a waveguide is the distance that light propagating through a waveguide would travel when propagating along the optical propagation axis of the waveguide. In some examples, the path length is affected by the width of the waveguide and/or the cladding of the waveguide. Path length is otherwise known as the physical path length and is not being used as equivalent to optical path length, which is commonly taken as the path length (or physical path length) multiplied by the refractive index of the medium the path is through.

A layer referred to herein is for example a single layer of homogenous material, though it is envisaged that in other examples a layer comprises one or more sublayers each of different materials.

Figure 11 schematically illustrates a method of manufacturing an interferometer in accordance with examples, comprising: at least partly forming the first waveguide; at least partly forming the second waveguide; at least partly forming the layer. The skilled person will readily understand how to manufacture an interferometer of examples described herein, e.g. using techniques such as: metalorganic vapour-phase epitaxy, surface passivation, photolithography, ion implantation, etching, dry etching ion etching, wet etching, buffered oxide etching, plasma ashing, thermal treatment, annealing, thermal oxidation, chemical vapor deposition, atomic layer deposition, physical vapor deposition, molecular beam epitaxy, laser lift-off, electrochemical deposition, electroplating, or chemical-mechanical polishing. In some examples etching techniques are used to remove portions of the layer, for example to provide a recess, as the skilled person will appreciate.

In examples, there is a method of designing an interferometer in accordance with examples, so that the interferometer is configured to reduce the change in the difference between: the first path length multiplied by the first effective refractive index, and the second path length multiplied by the second effective refractive index, with the change caused by at least one of an expansion force or a contraction force from the layer. In this way, an interferometer may be designed with appropriately shaped and sized structures, such as a waveguide width, to compensate for the contraction or expansion force from the layer.

The above examples are to be understood as illustrative examples of the invention and that further examples not described above may also be employed without departing from the scope of the accompanying claims.

## Claims

1. An interferometer (100) for a photonic integrated circuit, the interferometer (100) comprising:

   a first waveguide (104) with a first effective refractive index and a first path length along an optical propagation axis of the first waveguide (104);
   a second waveguide (108) with a second effective refractive index and second path length along an optical propagation axis of the second waveguide (108); and
   a layer (106) on at least one of the first waveguide (104) or the second waveguide (108),
   wherein the interferometer (100) is configured to reduce change in a difference between:

   the first path length multiplied by the first effective refractive index, and
   the second path length multiplied by the second effective refractive index,

   the change in the difference caused by at least one of an expansion force or a contraction force from the layer (106),

**characterized in that** the interferometer (100) is configured to reduce the change in the difference by at least one of:

i) a width (W102) of the first waveguide (104) perpendicular to the optical propagation axis of the first waveguide (104), different from and parallel a width (W104) of the second waveguide (108) perpendicular to the optical propagation axis of the second waveguide (108);

ii) a first width (W202) of the first waveguide (104) perpendicular to the optical propagation axis of the first waveguide (104) at a first point on the optical propagation axis of the first waveguide (104), different from and parallel a second width (W212) of the first waveguide (104) perpendicular to the optical propagation axis of the first waveguide (104) at a second point on the optical propagation axis of the first waveguide (104); or

iii) a recess (314) in the layer (106).

2. The interferometer (100) of claim 1, wherein the recess (314) is elongate parallel at least part of the first optical propagation axis.

3. The interferometer (100) of any of claim 1 or 2, wherein the recess (314) is a first recess, and the interferometer (100) is configured to reduce the change in the difference by a second recess (316) in the layer (106).

4. The interferometer (100) of claim 3, configured to reduce the change in the difference by, a first distance between a surface of the first waveguide closest to the first recess and a surface of the first recess closest to the surface of the first waveguide different from a second distance between a surface of the second waveguide closest to the second recess and a surface of the second recess closest to the surface of the second waveguide.

5. The interferometer (100) of claim 3 or 4, the second recess elongate parallel to the second optical propagation axis.

6. The interferometer (100) of any of claims 3 to 5, wherein at least one of the first waveguide or the second waveguide is between the first recess and the second recess.

7. The interferometer (100) of any previous claim, wherein at least one of:

the interferometer is configured as a passive wavelength filter;

a change of a wavelength output of the interferometer due to a change in expansion force or a contraction force from the layer is no greater than 0.1 nanometres;

the interferometer (100) comprises a passivation layer between the layer and at least one of: the first waveguide or the second waveguide;

at least one of the first waveguide or the second waveguide comprises an electro-refractive modulator;

at least one of the first waveguide or the second waveguide is a multiple quantum well waveguide;

the interferometer (100) is an asymmetric Mach-Zehnder interferometer;

the at least one of the expansion force or the contraction force is due to a change in at least one of humidity, temperature, or age of the layer; or

the layer comprises a polymer dielectric, polyimide, polyacrylate, polycarbonate, polysiloxane, or benzocyclobutene.

8. The interferometer (100) of any previous claim, wherein

at least one of the first waveguide or the second waveguide is curved; or

each of the first waveguide and the second waveguide are curved, and a radius of curvature of the first waveguide is different to a radius of curvature of the second waveguide.

9. The interferometer (100) of any previous claim, comprising indium phosphide.

10. The interferometer (100) of any previous claim, wherein the interferometer is on a monolith for a photonic integrated circuit.

11. A photonic integrated circuit comprising the interferometer (100) of any previous claim.

12. A photonic integrated circuit comprising two or more interferometers of any of claims 1 to 10.

13. A device comprising the photonic integrated circuit of claim 11 or 12.

14. A method of manufacturing the interferometer (100) of any of claims 1 to 10, the method comprising:

at least partly forming the first waveguide;
at least partly forming the second waveguide; and
at least partly forming the layer.

**Patentansprüche**

1.  Interferometer (100) für eine photonische integrierte Schaltung, das Interferometer (100) umfassend:

    einen ersten Wellenleiter (104) mit einem ersten effektiven Brechungsindex und einer ersten Pfadlänge entlang einer optischen Ausbreitungsachse des ersten Wellenleiters (104);
    einen zweiten Wellenleiter (108) mit einem zweiten effektiven Brechungsindex und einer zweiten Pfadlänge entlang einer optischen Ausbreitungsachse des zweiten Wellenleiters (108); und
    eine Schicht (106) auf mindestens einem von dem ersten Wellenleiter (104) oder dem zweiten Wellenleiter (108),
    wobei das Interferometer (100) konfiguriert ist, um eine Änderung einer Differenz zu reduzieren zwischen:

    der ersten Pfadlänge multipliziert mit dem ersten effektiven Brechungsindex und
    der zweiten Pfadlänge multipliziert mit dem zweiten effektiven Brechungsindex,
    wobei die Änderung der Differenz durch mindestens eines von einer Ausdehnungskraft oder einer Kontraktionskraft aus der Schicht (106) verursacht wird, **dadurch gekennzeichnet, dass** das Interferometer (100) konfiguriert ist, um die Änderung der Differenz durch mindestens eines zu reduzieren von:

    i) einer Breite (W102) des ersten Wellenleiters (104) senkrecht zur optischen Ausbreitungsachse des ersten Wellenleiters (104), verschieden von und parallel zu einer Breite (W104) des zweiten Wellenleiters (108) senkrecht zur optischen Ausbreitungsachse des zweiten Wellenleiters (108);
    ii) einer ersten Breite (W202) des ersten Wellenleiters (104) senkrecht zur optischen Ausbreitungsachse des ersten Wellenleiters (104) an einem ersten Punkt auf der optischen Ausbreitungsachse des ersten Wellenleiters (104), verschieden von und parallel zu einer zweiten Breite (W212) des ersten Wellenleiters (104) senkrecht zur optischen Ausbreitungsachse des ersten Wellenleiters (104) an einem zweiten Punkt auf der optischen Ausbreitungsachse des ersten Wellenleiters (104); oder
    iii) einer Vertiefung (314) in der Schicht (106).

2.  Interferometer (100) nach Anspruch 1, wobei die Aussparung (314) langgestreckt parallel zu mindestens einem Teil der ersten optischen Ausbreitungsachse ist.

3.  Interferometer (100) nach einem der Ansprüche 1 oder 2, wobei die Aussparung (314) eine erste Aussparung ist, und das Interferometer (100) konfiguriert ist, um die Änderung der Differenz durch eine zweite Aussparung (316) in der Schicht (106) zu reduzieren.

4.  Interferometer (100) nach Anspruch 3, das konfiguriert ist, um die Änderung der Differenz zu reduzieren durch einen ersten Abstand zwischen einer Oberfläche des ersten Wellenleiters, die der ersten Aussparung am nächsten ist, und einer Oberfläche der ersten Aussparung, die der Oberfläche des ersten Wellenleiters am nächsten ist, verschieden von einem zweiten Abstand zwischen einer Oberfläche des zweiten Wellenleiters, die der zweiten Aussparung am nächsten ist, und einer Oberfläche der zweiten Aussparung, die der Oberfläche des zweiten Wellenleiters am nächsten ist.

5.  Interferometer (100) nach Anspruch 3 oder 4, wobei die zweite Aussparung langgestreckt parallel zur zweiten optischen Ausbreitungsachse ist.

6.  Interferometer (100) nach einem der Ansprüche 3 bis 5, wobei sich mindestens eines von dem ersten Wellenleiter oder dem zweiten Wellenleiter zwischen der ersten Aussparung und der zweiten Aussparung befindet.

7.  Interferometer (100) nach einem der vorstehenden Ansprüche, wobei mindestens eines zutrifft von:

    das Interferometer ist als passiver Wellenlängenfilter konfiguriert;
    eine Änderung einer Wellenlängenausgabe des Interferometers aufgrund einer Änderung einer Ausdehnungskraft oder einer Kontraktionskraft von der Schicht beträgt nicht mehr als 0,1 Nanometer;
    das Interferometer (100) umfasst eine Passivierungsschicht zwischen der Schicht und mindestens einem von: dem ersten Wellenleiter oder dem zweiten Wellenleiter;
    mindestens eines von dem ersten Wellenleiter oder dem zweiten Wellenleiter umfasst einen elektro-refraktiven Modulator;
    mindestens eines von dem ersten Wellenleiter oder dem zweiten Wellenleiter ist ein Mehrfach-Quantentopf-Wellenleiter;
    das Interferometer (100) ist ein asymmetrisches Mach-Zehnder-Interferometer;
    das mindestens eine von der Ausdehnungskraft oder der Kontraktionskraft ist auf eine Änderung von mindestens einem von Feuchtigkeit, Temperatur oder Alter der Schicht zurückzuführen; oder

die Schicht umfasst ein Polymer-Dielektrikum, Polyimid, Polyacrylat, Polycarbonat, Polysiloxan oder Benzocyclobuten.

**8.** Interferometer (100) nach einem der vorstehenden Ansprüche, wobei

mindestens eines von dem ersten Wellenleiter oder dem zweiten Wellenleiter gekrümmt ist; oder
jedes von dem ersten Wellenleiter und dem zweiten Wellenleiter gekrümmt ist und ein Krümmungsradius des ersten Wellenleiters sich von einem Krümmungsradius des zweiten Wellenleiters unterscheidet.

**9.** Interferometer (100) nach einem der vorstehenden Ansprüche, umfassend Indiumphosphid.

**10.** Interferometer (100) nach einem der vorstehenden Ansprüche, wobei sich das Interferometer auf einem Monolithen für eine photonische integrierte Schaltung befindet.

**11.** Photonische integrierte Schaltung, umfassend das Interferometer (100) nach einem der vorstehenden Ansprüche.

**12.** Photonische integrierte Schaltung, umfassend zwei oder mehr Interferometer nach einem der Ansprüche 1 bis 10.

**13.** Vorrichtung, umfassend die photonische integrierte Schaltung nach Anspruch 11 oder 12.

**14.** Verfahren zum Herstellen des Interferometers (100) nach einem der Ansprüche 1 bis 10, das Verfahren umfassend:

das mindestens teilweise Bilden des ersten Wellenleiters;
das mindestens teilweise Bilden des zweiten Wellenleiters; und
das mindestens teilweise Bilden der Schicht.

**Revendications**

**1.** Interféromètre (100) pour un circuit intégré photonique, l'interféromètre (100) comprenant :

un premier guide d'ondes (104) avec un premier indice de réfraction effectif et une première longueur de trajet le long d'un axe de propagation optique du premier guide d'ondes (104) ;
un second guide d'ondes (108) avec un second indice de réfraction effectif et une seconde longueur de trajet le long d'un axe de propagation optique du second guide d'ondes (108) ; et
une couche (106) sur au moins l'un du premier guide d'ondes (104) ou du second guide d'ondes (108),
dans lequel l'interféromètre (100) est configuré pour réduire la variation d'une différence entre :

la première longueur de trajet multipliée par le premier indice de réfraction effectif, et
la seconde longueur de trajet multipliée par le second indice de réfraction effectif,
le changement de la différence causé par au moins l'une parmi une force d'expansion ou une force de contraction de la couche (106),

**caractérisé en ce que** l'interféromètre (100) est configuré pour réduire le changement de la différence par au moins l'un parmi :

i) une largeur (W102) du premier guide d'ondes (104) perpendiculaire à l'axe de propagation optique du premier guide d'ondes (104), différente et parallèle à une largeur (W104) du second guide d'ondes (108) perpendiculaire à l'axe de propagation optique du second guide d'ondes (108) ;
ii) une première largeur (W202) du premier guide d'ondes (104) perpendiculaire à l'axe de propagation optique du premier guide d'ondes (104) au niveau d'un premier point sur l'axe de propagation optique du premier guide d'ondes (104), différent de, et parallèle à une seconde largeur (W212) du premier guide d'ondes (104) perpendiculaire à l'axe de propagation optique du premier guide d'ondes (104) au niveau d'un second point sur l'axe de propagation optique du premier guide d'ondes (104) ; ou
iii) un évidement (314) dans la couche (106).

**2.** Interféromètre (100) selon la revendication 1, dans lequel le renfoncement (314) est allongé parallèlement à au moins une partie du premier axe de propagation optique.

**3.** Interféromètre (100) selon l'une quelconque des revendications 1 ou 2, dans lequel le renfoncement (314) est un premier renfoncement, et l'interféromètre (100) est configuré pour réduire le changement dans la différence par un second renfoncement (316) dans la couche (106).

**4.** Interféromètre (100) selon la revendication 3, configuré pour réduire la variation de la différence par, une première distance entre une surface du premier guide d'ondes la plus proche du premier évidement et une surface du premier évidement la plus proche de la surface du premier guide d'ondes différente d'une seconde distance entre une surface du second guide d'ondes la plus proche du second évidement et une surface du second évidement la plus proche de la surface du second guide d'ondes.

5. Interféromètre (100) selon la revendication 3 ou 4, le second évidement s'allonge parallèlement au second axe de propagation optique.

6. Interféromètre (100) selon l'une quelconque des revendications 3 à 5, dans lequel au moins l'un du premier guide d'ondes ou du second guide d'ondes est entre le premier creux et le second creux.

7. Interféromètre (100) selon l'une quelconque revendication précédente, dans lequel au moins l'un parmi :

> l'interféromètre est configuré comme un filtre de longueur d'onde passive ;
> un changement d'une sortie de longueur d'onde de l'interféromètre dû à un changement de force d'expansion ou de force de contraction de la couche n'est pas supérieur à 0,1 nanomètre ;
> l'interféromètre (100) comprend une couche de passivation entre la couche et au moins l'un parmi : le premier guide d'ondes ou le second guide d'ondes ;
> au moins l'un du premier guide d'ondes ou du second guide d'ondes comprend un modulateur électroréfractif ;
> au moins l'un du premier guide d'ondes ou du second guide d'ondes est un guide d'ondes à puits quantiques multiples ;
> l'interféromètre (100) est un interféromètre asymétrique de Mach-Zehnder ;
> l'au moins une parmi la force d'expansion ou la force de contraction est due à un changement d'au moins l'un parmi l'humidité, la température, ou l'âge de la couche ; ou
> la couche comprend un polymère diélectrique, polyimide, polyacrylate, polycarbonate, polysiloxane, ou benzocyclobutène.

8. Interféromètre (100) selon l'une quelconque revendication précédente, dans lequel

> au moins l'un du premier guide d'ondes ou du second guide d'ondes est incurvé ; ou
> chacun du premier guide d'ondes et du second guide d'ondes est incurvé, et un rayon de courbure du premier guide d'ondes est différent d'un rayon de courbure du second guide d'ondes.

9. Interféromètre (100) selon l'une quelconque revendication précédente, comprenant du phosphure d'indium.

10. Interféromètre (100) selon l'une quelconque revendication précédente, dans lequel l'interféromètre est sur un monolithe pour un circuit intégré photonique.

11. Circuit intégré photonique comprenant l'interféromètre (100) selon l'une quelconque revendication précédente.

12. Circuit intégré photonique comprenant deux interféromètres ou plus selon l'une quelconque des revendications 1 à 10.

13. Dispositif comprenant le circuit intégré photonique selon la revendication 11 ou 12.

14. Procédé de fabrication de l'interféromètre (100) selon l'une quelconque des revendications 1 à 10, le procédé comprenant :

> la formation, au moins partielle, du premier guide d'ondes ;
> la formation, au moins partielle, du second guide d'ondes ; et
> la formation, au moins partielle, de la couche.

100

OPA100 ⊗

106

W102

104

W104

108

102

y

x

**Figure 1**

200

P210

215

204

208

215

LPA200

P200

215    215

z

x

**Figure 2**

200

P200

OPA200

206

W202

204

W204

208

215

y

x

202

**Figure 3**

200

P210

OPA200

206

W212

204

W204

208

215

y

x

202

**Figure 4**

**Figure 5**

300

P320

314          316

OPA300 ⊗

306          306          306

W302          W304

304          308

302

y

x

**Figure 6**

400

414          416          418

OPA400 ⊗

406          406          406

W412   W414          W416          W418

W402          W404

404          408

402

y

x

**Figure 7**

**Figure 8**

**Figure 9**

700

730

Z

X

**Figure 10**

| At least partly forming the first waveguide |
|---|

| At least partly forming the second waveguide |
|---|

| At least partly forming the layer |
|---|

**Figure 11**

**EP 4 476 578 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030223672 A1
- EP 3757633 A1
- EP 2518547 A1